# EUROPEAN PATENT APPLICATION

(11) **EP 1 944 591 A1**
(43) Date of publication of application: **16.07.2008**
(21) Application number: 07075022.9
(22) Date of filing: 10.01.2007
(51) Int. Cl.: G01J 5/10

(54) **Method and device for detecting heat sources**

(71) Applicant: Nederlandse Organisatie voor toegepast-natuurwetenschappelijk Onderzoek TNO, 2628 VK Delft (NL)
(72) Inventor: van Ewijk, Lucas Johannes, 3135 JD Vlaardingen (NL); Nennie, Frans Antonius, 2726 SR Zoetermeer (NL); van der Houwen, Eric Herman, 2264 CR Leidschendam (NL)
(74) Representative: van Loon, C.J.J.

(57) **Abstract**

A method of detecting a heat source (1) comprises the step of detecting electromagnetic radiation emitted by the heat source while using an antenna unit (4). The radiation is detected in a frequency range of approximately 0.5 GHz to 30 GHz. The antenna unit (4) may be located on one side of an obstacle (2), such as a wall or roof, while the heat source (1) is located on the other side. The method may involve scanning and imaging. A device (3) for detecting a heat source may comprise a display screen (5) for displaying the location of the heat source.

## Description

The present invention relates to a method and a device for detecting heat, for example the heat produced by a burning object. More in particular, the present invention relates to a method and device for detecting radiation emitted by a heat source by using an antenna.

It is well known to detect heat, in particular the heat produced by heat sources such as living bodies, running engines, and fire. Typically, infrared (IR) light detectors are used to detect heat sources, as relatively warm objects emit significantly more infrared radiation than other objects. Such IR detectors are most susceptible to radiation frequencies in the range of approximately 3.10¹² to 3.10¹⁴ Hz (3 THz to 300 THz), which corresponds to wavelengths in the range of approximately 100 µm to 1 µm.

Although infrared light detectors can be very effective, their use is limited to specific circumstances. Infrared light detectors work only in a limited range. In addition, any obstructions between the heat source and the detector may block the infrared radiation and hence prevent any detection. For this reason, it has been attempted to use other types of detectors to detect heat. In particular, it has been proposed to detect radiation at other frequencies than the infrared frequency range.

United States Patent US 5 959 589 discloses a system and method for thermal imaging, in particular for detecting fires. A rotatable radial scanning antenna unit is used to detect fires over substantial distances and through obscurants such as smoke and rain. In particular, the system of US 5 959 589 is effective over an operating range of 0.75 to 3.0 km, using a radiometer operative at 94 GHz, corresponding to a detected wavelength of 3.2 mm. At this frequency of 94 GHz, the known system is hardly affected by adverse atmospheric conditions, such as rain and fog. The antenna unit of the known system is mounted on a relatively high tower such that the path of the antenna unit clears any obstacles, such as trees and buildings, which would otherwise prevent good heat source detection.

British Patent GB 1 166 887 discloses a method of measuring the temperature of a molten metal in a container having at least partially heat-resistant walls. In this known method, electromagnetic radiation emitted by the molten metal at a frequency of 35 GHz is detected. Subsequently the energy of the detected radiation is measured, and the temperature of the metal is then derived from the measured energy. An antenna unit is mounted adjacent the heat-resistant wall of the container, near an opening in the lining of the container to allow the radiation to reach the antenna. The frequency of 35 GHz, which corresponds to a wavelength of 8 mm, imposes certain restrictions on the container: its walls must be made of a certain material, preferably magnesia, and the antenna unit must be placed in direct contact with the container.

Often there is a need to detect a heat source which is not directly visible, for example because the heat source is located behind a wall or other obstacle. The heat source may be an undetected fire in a room or house, a steam duct located in or behind a wall, or another heat source outside a direct line of sight. The Prior Art does not allow detection of such a heat source. The method of US 5 959 589, which detects radiation having a frequency of 94 GHz, has the disadvantage that the radiation is substantially blocked by obstacles, such as walls, thus making this known method unsuitable for detecting heat sources which are located behind walls or other obstacles. The method of GB 1 166 887 allows a heat source, such as molten metal, to be detected in the presence of an obstacle, but imposes restrictions on the obstacle and requires the antenna unit to be placed in direct contact with the obstacle. The known methods therefore fail to indicate how a heat source can be detected at a distance from one or more obstacles made of common materials, for example materials found in buildings, such as wood, brick and concrete. There is no obvious solution to this problem.

The present invention seeks to solve this problem and to provide a method and a device for detecting a heat source, which method and device also function in the presence of an obstacle between the heat source and the detector antenna unit, and which do not require the antenna unit to be in direct contact with the obstacle.

Accordingly, the present invention provides a method of detecting a heat source, the method comprising the step of detecting radiation emitted by the heat source using an antenna unit, which method is characterized in that the radiation is detected in a frequency range of approximately 0.5 GHz to approximately 30 GHz.

By selecting a frequency range of 0.5 GHz to 30 GHz, preferably 2 GHz to 20 GHz, a very effective detection is possible, even in the presence of obstacles between the heat source and the antenna unit. Although the emission of radiation in this frequency range is lower than at higher frequencies, such as the 35 GHz or 94 GHz frequencies of the Prior Art, it has been found that the attenuation imposed by obstacles is significantly less at lower frequencies. At least part of the present invention resides in the insight that the frequency range of approximately 0.5 to 30 GHz provides an optimum trade-off between the energy of the emitted radiation and the attenuation caused by any obstacle through which said radiation must pass.

Within the preferred frequency range mentioned above, a sub-range may be selected for certain specific applications. When an obstacle is made of concrete, for example, relatively low frequencies of 2 GHz to approximately 10 GHz may be selected, whereas for wooden obstacles higher frequencies may be used. In other applications, the radiation may be detected in a frequency range of approximately 7 GHz to 15 GHz, preferably approximately 9 GHz to 13 GHz.

It is noted that the method of the invention is passive in that an antenna unit is used only to receive radiation emitted by the heat source; typically there is no need for the antenna unit to emit radiation.

In a particularly advantageous embodiment of the invention, the antenna unit is located on one side of an obstacle and the heat source is located on the other side of the obstacle. The obstacle may, for example, be a wall, floor, roof, fence, billboard, or building. This allows for example a fire to be detected through a wall, which is very advantageous for fire departments, emergency rescue crews and others who have to negotiate through dangerous environments involving fire and/or extreme temperatures.

It will be understood that the method of the present invention is also suitable in the absence of an obstacle. In addition, the method of the present invention may be used at various distances from the heat source, for example from approximately 10 cm to 100 m or more, although other distances are also feasible.

Antenna units used in the present invention may be directional antenna units, that is, antenna units which detect radiation mainly in a single direction defined by a main antenna beam (main lobe). Although the method of the present invention may be carried out in such a way that radiation from a heat source is detected in a single direction only, it is preferred that detection takes place in more than one direction. Accordingly, it is preferred that the method of the present invention involves scanning. More in particular, the scanning step may comprise either one-dimensional scanning, in which the antenna beam is moved in a single plane, or two-dimensional scanning, in which the antenna beam is moved in two (preferably orthogonal) planes. Even three-dimensional scanning is possible by combining two-dimensional scanning with a varying focus.

The antenna beam may be moved in various ways. For example, the antenna unit may be moved in one or two planes by hand. This has the advantage of being technically simple and robust. To obtain a more accurate scanning pattern, in particular in two dimensions, electrical and/or mechanical scanning means are required. In an advantageous embodiment, electric motors or other means are provided for moving the antenna unit up and down, and/or from side to side.

If an array of antenna units is used, the scanning step may involve beam forming and sweeping. Such an antenna array may be one-dimensional (linear) or two-dimensional and may, for example, comprise 5, 10, 25, 30, 36 or more antennas or antenna units. Beam forming and sweeping are techniques well known in the art.

If scanning is used, the method of the present invention preferably further comprises the step of producing an image of the scanned area. This image may be rendered on a suitable display screen.

In a particularly advantageous embodiment, the antenna unit uses a focused beam. Such a focused beam may be obtained by using a reflector antenna unit in which the antenna unit's focal point is located between the feed point and the reflector. In other words, the feed point may be spaced apart from the focal point in a direction away from the reflector. A focused beam serves to obtain an improved spatial resolution. It will be understood by those skilled in the art that a focused antenna beam can be used with or without scanning.

The present invention also provides a method of detecting a fire behind a wall, which method comprises the steps of detecting radiation emitted by the fire in a frequency range of approximately 0.5 GHz to 30 GHz, preferably in a frequency range of about 2 GHz to 20 GHz.

The present invention additionally provides a device for detecting a heat source, the device comprising an antenna unit for detecting radiation emitted by the heat source, characterized in that the device is arranged for detecting the radiation in a frequency range of approximately 0.5 GHz to 30 GHz, preferably in a frequency range of about 2 GHz to 20 GHz.

The device of the present invention may advantageously further comprise antenna beam movement means for moving the antenna beam. The antenna beam movement means may comprise at least one electric motor. If the antenna is part of an array of antennas, wherein the antenna beam movement means may comprises a beam steering unit so as to allow beam sweeping. The device of the present invention may further comprise imaging means for producing an image from the detected radiation, and a display screen for displaying the image.

The present invention will be discussed in more detail below with reference to the accompanying drawings, in which:
Fig. 1 schematically shows, in side view, an arrangement for detecting heat according to the present invention.
Fig. 2 schematically shows radiation and attenuation in selected materials as a function of frequency.
Fig. 3 schematically shows focused and unfocused antenna beams as may be used in the present invention.
Fig. 4 schematically shows a detection circuit which may be used in the device according to the present invention.
Fig. 5 schematically shows, in top view, sweeping of the antenna beam in an embodiment of the present invention.
Fig. 6 schematically shows, in side view, varying the height of the antenna beam in an embodiment of the present invention.
Fig. 7 schematically shows, in isometric view, an arrangement for varying the direction of the antenna beam in an embodiment of the present invention.

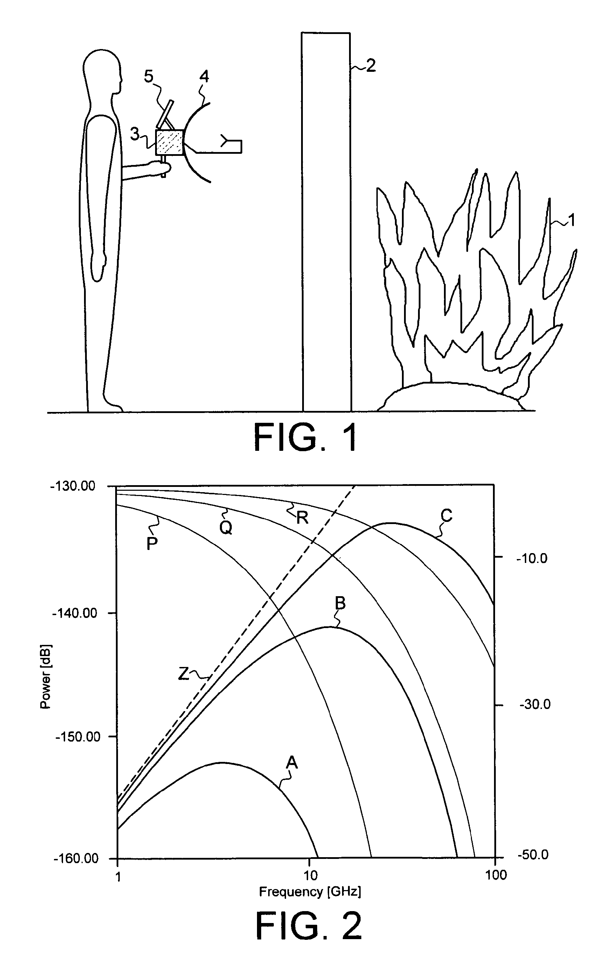

The merely exemplary arrangement illustrated in Fig. 1 comprises a hand-held heat detection device 3 according to the present invention. The heat detection device 3 is provided with an antenna unit 4 and contains circuitry for detecting radiation energy received by the antenna unit 4. In addition, the heat detection device 3 shown contains a display screen 5 for displaying a radiation pattern, and may also comprise a loudspeaker for producing an auditory alert signal. Instead of the display screen 5, a radiation intensity read-out device or an indicator light may be used. In the embodiment shown in Fig. 1, the heat detection device 3 is portable so as to be carried by an operator, but other embodiments be provided with wheels.

In the situation illustrated in Fig. 1, a fire 1 is located behind an obstacle 2, for example a brick wall, which hides the fire from view. Conventional infrared detectors are not capable of detecting a fire behind a brick wall, as infrared radiation will not penetrate through the wall. The present invention solves this problem by measuring radiation, in particular electromagnetic radiation, in another frequency range.

Fig. 2 schematically illustrates the principle of the present invention, which principle is based upon radiometry. The horizontal axis of Fig. 2 indicates the frequency in GHz (logarithmic scale), while the vertical axes indicate radiation power and radiation attenuation as a function of frequency. The invention advantageously utilizes a fact known from physics: all physical matter radiates (electromagnetic) radiation, the power of the radiation being dependent on the temperature of the matter. As a result, hot and particularly burning matter will produce more radiation than matter that is less hot, and the difference in radiation power can be detected. However, radiation will be absorbed by any obstacles between the hot matter and the detector antenna, making the detection of hot matter in the presence of obstacles very difficult. The present invention solves this problem by selecting a suitable frequency range in which radiation is to be detected, as will be explained below.

The left vertical axis of Fig. 2 shows transmitted radiation power as a function of the frequency. The power is shown as a power ratio measured in dB (decibel) on a linear scale. The line Z indicates the power radiated by a black body at 1000 K (727° C). As can be seen, the radiated power increases with the frequency. It would therefore be obvious to measure the radiation of a heat source at the highest frequency possible, as the higher energy content makes detection of the radiation easier.

The right vertical axis shows the attenuation in dB (logarithmic scale). The curves P, Q and R illustrate the typical attenuation as a function of the frequency, of concrete, aerated concrete and wood (door panel) respectively. It can be seen that the attenuation is relatively small at low frequencies, while increasing significantly at higher frequencies. The attenuation of concrete (curve P), for example, is about 2 dB at 1 GHz, 23 dB at 10 GHz, and 46 dB at 20 GHz.

The present inventors have combined the line Z with each of the curves P, Q and R, resulting in the curves A, B and C respectively. The curves A, B and C represent the power of a heat source as attenuated by the various materials and as a function of the frequency. As can be seen, the radiation power transmitted through regular concrete (curve A) reaches a maximum around 4 GHz, while the radiation power transmitted through a wooden door peaks before 30 GHz. It is noted that these frequencies are significantly lower than the frequencies of infrared radiation, which are measured in THz (terahertz, 1 THz = 1000 GHz).

Accordingly, the present invention detects the radiation of a heat source in the frequency range of 0.5 GHz to 30 GHz, preferably 2 GHz to 20 GHz. It can be seen that the range 5 GHz to 15 GHz is still advantageous, and that other ranges can be selected in dependence on the particular material. If the material attenuating the radiation is not concrete, frequencies between 10 GHz and 12 GHz are suitable. In particular, the radio astronomy band centered around 10.7 GHz is preferred as in this band little interference occurs.

In a particularly advantageous embodiment, multiple bands can be used to detect radiation. For example, a first band ranging from 0.5 to 10 GHz, a second band ranging from 10 to 20 GHz and a third band ranging from 20 to 30 GHz may be utilized. Each band may detect radiation transmitted through another type of material, while an antenna unit may be optimized for each frequency band. Accordingly, a detection device according to the present invention may be arranged for two or more frequency bands. To this end, the device may comprise two, three or possibly more antenna units or antenna feeds, each antenna unit or antenna feeds being designed for a particular, different frequency band. The frequency bands of the multiple antenna units may or may not overlap. Additionally, or alternatively, the device of the present invention may be provided with at least two radiation detector units, each detector unit being arranged for detecting radiation in a particular frequency band different from the frequency bands of the other detector units. By providing two or more antenna units and/or two or more detector units designed for different frequency bands, the detection of heat sources can be further improved.

Although the present invention may be used in circumstances where no obstacles between the heat source and the antenna unit are present, the surprising feature of the invention is the ability to detect a heat source "through a wall" or other obstacle. That is, even if a heat source is hidden from view, it may still be detected. It will be understood that the obstacle may be a wall, roof, floor, fence, hedge, billboard, or other obstacle. As illustrated in Fig. 1, the antenna unit 4 may be spaced apart from the obstacle 2. The distance between the antenna unit 4 and the obstacle 2 may range from almost zero to several meters. The largest distance between the antenna unit 4 and the obstacle 2 will in practice be determined by the size of the antenna unit 4, the sensitivity of the heat detection device 3, and the dimensions and the material of the obstacle 2.

The method of the present invention, which comprises the step of detecting radiation emitted by the heat source using an antenna unit, which radiation is detected in the frequency ranges mentioned above, is essentially a passive method: radiation is detected which is emitted by the heat source, it is not necessary for the antenna unit to emit radiation. Accordingly, the present invention is not based upon reflection.

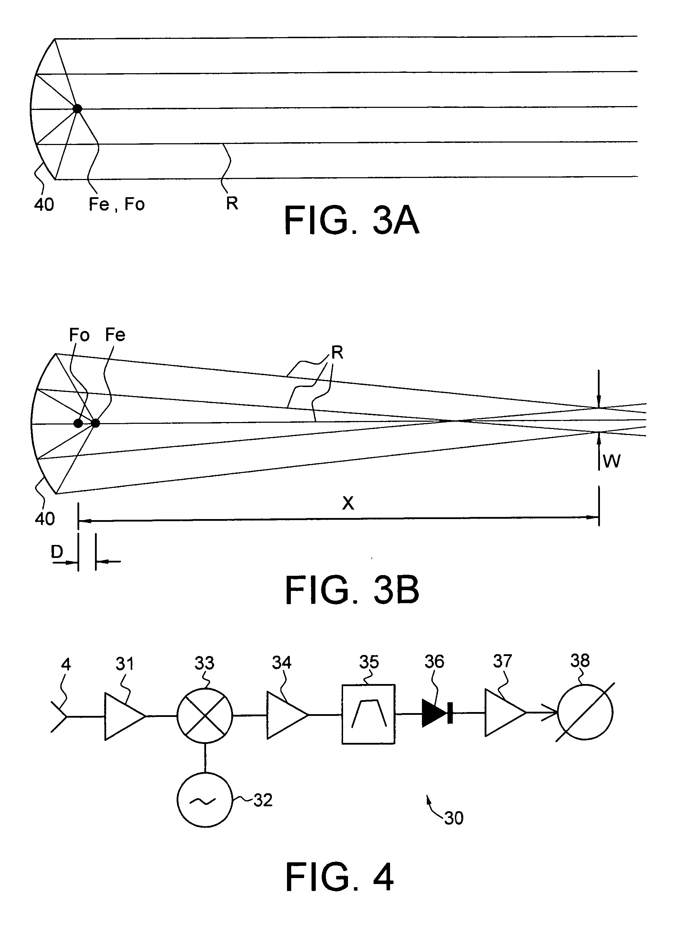

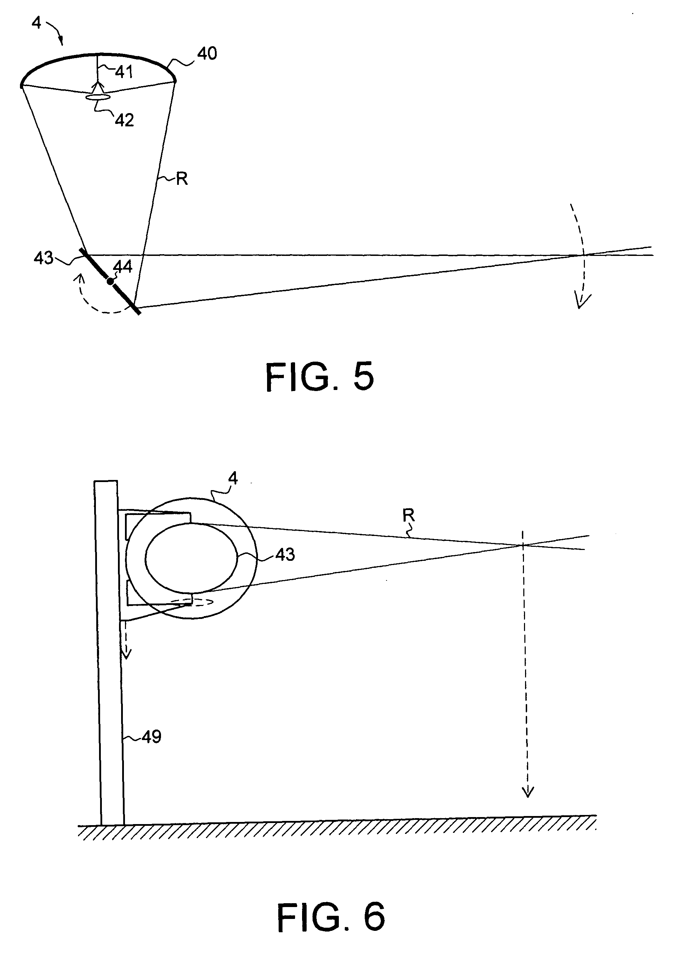

In a preferred embodiment, a focused antenna beam is used to obtain a higher resolution. This is illustrated in Fig. 3, where both the focal point Fo and the feed point Fe of the antenna unit 4 are shown. Those skilled in the art will realize that the focal point Fo is determined by the curvature of the reflector 40, while the feed point is determined by the position of the actual antenna (receptor 41 in Fig. 5).

In Fig. 3A, the focal point Fo and the feed point Fe coincide, resulting in essentially parallel "rays" R. That is, any parallel radiation beam will be focused on the feed point Fe of the actual antenna. In Fig. 3B, however, the feed point Fe is spaced apart from the focal point Fo, that is, the feed point Fe is further away from the reflector 40 than is the focal point Fo. The distance between the feed point Fe and the focal point Fo is designated D in Fig. 3B and may be equal to 1-5 cm, for example 3 cm. However, those skilled in the art will realize that the distance D may be varied so as to vary the distance X. It can be seen that the "rays" of the antenna beam converge and reach a minimum width W at a certain distance X from the feed point Fe. This reduced width W results in an improved resolution, in particular when an object or heat source is scanned at a distance X.

By varying the distance D between the feed point Fe and the focal point Fo, the distance X at which the smallest beam width W occurs. In this way, depth information may be obtained.

A merely exemplary radiation detection unit 30, which may be part of the heat detection device 3, is illustrated in Fig. 4. In the embodiment of Fig. 4, the detection unit 30 comprises a first (low noise) amplifier 31, an oscillator 32, a mixer 33, a second (intermediate frequency) amplifier 34, a band-pass filter 35, a detector 36, a third (video) amplifier 37 and a read-out unit 38.

The first amplifier 31 is coupled to the antenna unit 4 and receives the antenna signal. The amplified antenna signal is fed to the multiplier 33. The oscillator 32 produces an oscillation signal of, for example, 10 GHz, and feeds this signal to the multiplier 33. The signal resulting from the multiplication contains frequencies equal to both the sum and the difference of the frequencies of the antenna signal and the oscillation signal. The band-pass filter 35 selects the signal components having a frequency equal to said frequency difference and subsequently the energy level of this band-pass signal is detected by the detector 36. The detected energy level signal is finally adapted by the third amplifier 37 before being fed the read-out unit 38.

As mentioned above, the device of the present invention may comprise two or more detection units 30, each detection unit being designed for a particular frequency range. For example, the band pass filter 35 of each detection unit can be designed to pass a different frequency band. Advantageously, the device of the present invention may also comprise two or more antenna units (or antenna feeds, if an antenna array is used) designed for different frequency ranges. In this way, the frequency ranges of the antenna units can be matched with the frequency ranges of the corresponding detection units.

It is noted that the embodiment of Fig. 4 is exemplary only and that many other embodiments can be envisaged, for example embodiments in which one or more amplifiers have been omitted. The read-out unit 38 may be constituted by an indicator light, a voltmeter, or a display screen (such as the display screen 5 of Fig. 1). If a display screen is used, a two-dimensional representation may be used.

In order to provide a two-dimensional representation of the detected radiation indicative of a heat source, a scanning of the heat source should take place. This scanning may be carried out by hand, for example using a hand-held antenna unit. It is preferred, however, that the device 3 is capable of providing scanning in at least one direction automatically, without requiring human intervention, for example by sweeping in at least one direction.

An exemplary embodiment of a heat detection device 3 capable of scanning is schematically and partially illustrated in the top view of Fig. 5. The antenna unit 4 of the heat detection device comprises a reflector 40, a receptor antenna 41, an auxiliary reflector 42, and a mirror 43. The mirror 43 is rotatable about an axis 44, for example by an electric motor (not shown). As can be seen in Fig. 5, the rotatable mirror causes the rays R of the scanning beam to describe a circular path, thus scanning in one direction (in the embodiment shown in a horizontal plane). To allow scanning in two directions, an additional movement may be made, as is illustrated in Fig. 6.

In the merely exemplary embodiment of Fig. 6, the antenna unit 4 is mounted on a pole or linear slide 49. The antenna unit 4 can be moved up and down along the pole, for example by hand but preferably be an electric motor (not shown). This allows a scanning in a vertical plane. By combining the embodiments of Figs. 5 and 6, scanning in two planes is made possible. This, in turn, allows the detection device to produce a two-dimensional image of the detected radiation.

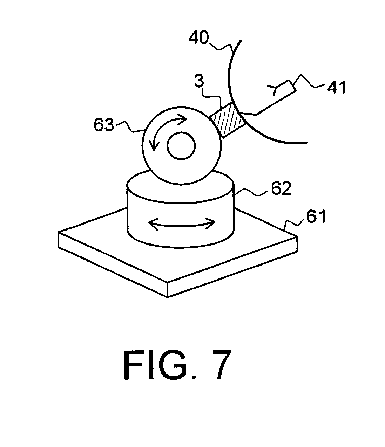

In the exemplary embodiment of Fig. 7, the device 3 and the antenna unit 4 (reflector 40 and receptor antenna 41) are mounted on an assembly which allows movement in several directions. The assembly comprises a base 61, a first rotation unit 62 and a third rotation unit 63. The first rotation unit 62, which is mounted on the base 61, allows rotation about a vertical axis (azimuthal rotation). The second rotation unit 63, which couples the first rotation unit 62 and the device 3, allows rotation about a horizontal axis (elevational rotation). Both rotation units are preferably provided with (electric) motors so as to move the antenna unit into suitable positions.

Instead of, or in addition to mechanical scanning, electronic scanning is possible when beam forming and sweeping using multiple antennas or antenna units. By changing the distance X in Fig. 3B, three-dimensional scanning may be achieved. The invention is not limited to the particular antenna unit type shown and antenna units having an elliptical reflector or antenna units having no reflector may be used alternatively or additionally.

The heat detection device of the present invention is relatively inexpensive and can be made as a hand-held device which includes an antenna unit. The heat detection device has low power requirements and can be battery-powered and light-weight. In certain embodiments, the device can be attached to a suit, for example a firefighter's suit, or be integrated in a suit, so as to leave the operator's hands free.

Particularly advantageous antenna units comprise an at least partially transparent reflector. This allows the operator to use the antenna unit as a shield in dangerous environments, such as burning buildings. A partially transparent reflector may consist of a reflector shell of toughened glass or plastic, which shell is provided with a metal grid or mesh.

The present invention also provides a method of detecting burning matter, the method comprising the step of detecting radiation emitted by the heat source using an antenna unit, which radiation is detected in a frequency range of approximately 0.5 GHz to 30 GHz. This method can also be used when the antenna unit is located on one side of an obstacle and the heat source is located on the other side of the obstacle. Accordingly, the present invention is particularly suitable for firefighters who want to determine the location of burning matter, for example in buildings. By using the present invention, a firefighter is able to determine whether a fire is burning in a room, before entering the room. This will significantly enhance the safety of firefighters who enter burning buildings.

The present invention is based upon the insight that radiation in a frequency range of approximately 0.5 GHz to 30 GHz is suitable for detecting a heat source. The present invention benefits from the further insight that the attenuation caused by building materials in this frequency range is sufficiently low to be able to detect radiation.

It will be understood by those skilled in the art that the present invention is not limited to the embodiments discussed above and that many additions and modifications may be made without departing from the scope of the present invention as defined in the appending claims.

## Claims

1. A method of detecting a heat source (1), the method comprising the step of detecting radiation emitted by the heat source using an antenna unit (4), which method is **characterized in that** the radiation is detected in a frequency range of approximately 0.5 GHz to 30 GHz.

2. The method according to claim 1, wherein the radiation is detected in a frequency range of approximately 2 GHz to 20 GHz, preferably approximately 7 GHz to 15 GHz, more preferably approximately 9 GHz to 13 GHz.

3. The method according to claim 1, wherein the antenna unit (4) is located on one side of an obstacle (2) and the heat source (1) is located on the other side of the obstacle.

4. The method according to claim 1, 2 or 3, further comprising the step of using the antenna unit (4) to scan an area.

5. The method according to claim 4, further comprising the step of producing an image of the scanned area.

6. The method according to any of the preceding claims, wherein the antenna unit (4) uses a focused beam.

7. The method according to any of the preceding claims, wherein the antenna unit (4) comprises an array of antennas, and wherein preferably beam forming is used, and more preferably also sweeping.

8. A device (3) for detecting a heat source (1), the device comprising an antenna unit (4) for detecting radiation emitted by the heat source, **characterized by** being arranged for detecting the radiation in a frequency range of approximately 0.5 GHz to 30 GHz.

9. The device according to claim 8, which device is arranged for detecting the radiation in a frequency range of approximately 2 GHz to 20 GHz, preferably approximately 7 GHz to 15 GHz, more preferably approximately 9 GHz to 13 GHz.

10. The device according to claim 8 or 9, further comprising antenna beam movement means for moving the antenna beam.

11. The device according to claim 10, wherein the antenna beam movement means comprises at least one electric motor.

12. The device according to claim 10, wherein the antenna unit (4) comprises an array of antennas, and wherein the antenna beam movement means comprises a beam steering unit.

13. The device according to any of claims 8-12, designed for at least two different frequency bands, the device preferably comprising multiple antenna units (4) and/or multiple detection units (30) designed for different frequency bands.

14. The device according to any of claims 8-13, further comprising imaging means for producing an image from the detected radiation, and a display screen (5) for displaying the image.

15. The device according to any of claims 8-14, which is a portable device, preferably a hand-held device.
